# EUROPEAN PATENT SPECIFICATION

(11) **EP 1 269 792 B1**
(45) Date of publication and mention of the grant of the patent: **07.04.2004**
(21) Application number: 01915504.3
(22) Date of filing: 27.03.2001
(51) Int. Cl.: H04R 3/00, B63B 49/00, G11B 20/00, G10L 19/00

(54) **MULTICHANNEL VOICE RECORDER**
MULTIKANAL-SPRACHAUFZEICHNUNGSGERÄT
ENREGISTREUR VOCAL MULTICANAL

(30) Priority: 01.04.2000 GB 0007977
(43) Date of publication of application: 02.01.2003
(73) Proprietor: DB Research Limited, Bootle, Merseyside L20 3BG (GB)
(72) Inventor: MULLARKEY, William Joseph, Appley Bridge, West Lancs WN6 9DJ (GB)
(74) Representative: Wombwell, Francis
(86) International application number: PCT/GB2001/001344
(87) International publication number: WO 2001/076318

(56) References cited:
- DE-A- 3 207 127
- US-A- 5 335 011
- ZHAO LI ET AL: "Application of microphone array for speech coding in noisy environment" CONFERENCE RECORD OF THIRTIETH ASILOMAR CONFERENCE ON SIGNALS, SYSTEMS AND COMPUTERS (CAT. NO.96CB36004), CONFERENCE RECORD OF THE THIRTIETH ASILOMAR CONFERENCE ON SIGNALS, SYSTEMS AND COMPUTERS, PACIFIC GROVE, CA, USA, 3-6 NOV. 1996, pages 45-49 vol.1, XP002172809 1997, Los Alamitos, CA, USA, IEEE Comput. Soc. Press, USA ISBN: 0-8186-7646-9
- SILVERMAN H F ET AL: "Early experimental results for a large-aperture microphone-array system" PROCEEDINGS OF THE 2000 IEEE SENSOR ARRAY AND MULTICHANNEL SIGNAL PROCESSING WORKSHOP. SAM 2000 (CAT. NO.00EX410), PROCEEDINGS OF THE 2000 IEEE SENSOR ARRAY AND MULTICHANNEL SIGNAL PROCESSING WORKSHOP, CAMBRIDGE, MA, USA, 16-17 MARCH 2000, pages 207-211, XP002172810 2000, Piscataway, NJ, USA, IEEE, USA ISBN: 0-7803-6339-6

## Description

This invention relates to a data compression system for combining a plurality of audio channels whilst retaining the intelligibility of the respective channels. Said system enabling the recordal of speech from one or more individuals within a predetermined area utilising a plurality of spaced-apart microphones. Said system efficiently captures audio signals, as part of, for example, a broadcast system or data-recorder.

Data-recorders have found application in a number of fields, for example, flight data-recorders fitted to aircraft, which are popularly referred to as black box recorders. Data-recorders fall broadly into two categories: those which are used to record flight parameters including the aircraft instrument readings, surface position and system status, termed flight data recorders, and cockpit voice recorders. Such data-recorders have to be constructed as to allow the stored data to be retrieved easily in the event of a crash. Because of their construction and the need for qualification approval in terms of shock damage, fire resistance and water immersion, these recorders are expensive. In an aircraft, such recorders continually write data over previously recorded data, so that only generally the last 30 minutes of information is retained. In the event of a crash, the recording is halted, thereby storing a record of data indicative to the conditions immediately prior to the crash. In recent years, it has also become compulsory for maritime vessels to carry a similar data-recorder. Earlier generations of recorders utilised magnetic tape as the storage medium, although recently these have been superseded by recorders utilising solid state memory, such as typically EEPROM, flash EEPROM, static or dynamic RAM.

However, for maritime applications, where the timescale of a crash or other event is somewhat longer, typically a 12 hour time window will be recorded. As with a flight recorder, parameters such as the surface position, and other instrument readings are recorded, including the voices of the crew stationed on the bridge of the ship. However, this is achieved using just a single data-recorder. Clearly, as the bridge of a large ferry or tanker can be in excess of 30 metres long by 5 metres wide, a single microphone would be insufficient. Indeed, the International Maritime Organisation requires conversations to be recorded within 2 metres of at least seven well-spaced workstations, each containing a microphone. It is desirable that 16 bit (CD) dynamic range recording is required to maintain intelligibility, since the output of a microphone is clearly dependent upon the amplitude of the speech, the distance of the talker from the microphone and the magnitude of the background noise.

Unfortunately, this creates problems in terms of the storage requirements for solid state memory. To illustrate, the international Maritime Organisation specifies that the recordal of speech requires a bandwidth of 150 to 6000 Hz, which implies a sampling frequency of 14 to 16 KHz. If no data compression is used, the seven encoded channels from each microphone would require 7 x 16000 x 16 bits per second, which is approximately 9.7 gigabytes for the required 12 hours of recording. Since, the present cost of flash memory is about £2000 per gigabyte this would represent a sum of around £20,000 to store the audio signals alone. Furthermore, it has been found experimentally that significant improvements in recording clarity can be achieved if at least eight microphones are utilised which, detrimentally, increase the storage requirements to over 11.1 gigabytes for the required 12 hours.

It has been proposed that the outputs of, say, four microphones could be simply summed, which would reduce the storage requirements by a factor of four. However, this creates four problems: firstly, information is lost about the location of the talker. Secondly, for most of the time there will be only one microphone that is close enough to the talker to provide a clear speech derived output, whilst the other three will pick up noise. Thirdly, the intensity of speech in air follows an inverse square law with distance; however this only generally applies for the first few metres. After that, multi-path effects reduce the law so that the microphones that are distant from the talker receive some speech-like sounds from attenuated replicas transmitted and reflected around the acoustically noisy bridge that are themselves summations of many audio signals having measurably different path lengths. Finally, distant microphones will receive speech that is delayed relative to the microphone that is the closest. Unfortunately, it is the last two of these problems that create the greatest difficulty. As the speed of sound in air is only around 300 metres per second, path differences of a few metres are significant when compared to the overall length of, for example, a syllable. Adding clear speech to delayed unclear speech, will of course, be detrimental to the overall intelligibility of the stored signal.

It is the object of the present invention to provide a data compression system for combining a plurality of audio channels whilst retaining the intelligibility of the respective channels. Said system enabling the recordal of speech from one or more individuals within a predetermined area utilising a plurality of well-spaced microphones. The corresponding data compression ratio is around 16:1 and the requirements for storage are reduced to 0.7 gigabytes for the required 12 hours of storage, a significant improvement.

According to the present invention there is provided a data compression system for combining a plurality of audio channels whilst retaining the intelligibility of the respective channels relative to one another and minimizing the relative storage requirements, comprising:
input means for receiving a plurality of audio signals;
weighting means for weighting each of said audio signals in accordance with a predetermined weighting factor which is determined as a function of the short term RMS amplitude characteristics and long term RMS amplitude characteristics of each of said audio signals;
summing means for receiving and combining said weighted audio signals;
encoding means for digitally encoding the output of said summing means; and
storage means for storing said digitally encoded summed signal.

Preferably, said weighting means utilizes amplitude weighting, the weighting function being derived as a function of the short term and long term amplitude of the respective input signals, the short term amplitude factor being determined primarily from the intelligible portion of the audio signal, whilst the long term amplitude factor is primarily derived from background noise levels, the ratio of the short term to long term amplitude providing the required weighting factor for the respective signal. The weighting functions of each respective signal being a function of the short and long term amplitude of all input signals. Further preferably, the short term and long term amplitude information is digitally encoded and stored with the weighted combined signal for use during playback. In terms of storage requirements, the weighting functions take up only minimal memory space. Upon playback of this multiplexed signal. the information they contain may be used to provide some of the spatial information which would be lost by simple mixing. The audio signals are preferably supplied by the outputs from a plurality of microphones.

Also according to the present invention there is provided a data compression system for enabling the recordal of speech from one or more individuals within a predetermined area utilizing a plurality of spaced-apart microphones, comprising:
means for receiving respective audio outputs from each of said microphones and weighting each of said respective signals in accordance with a predetermined weighting factor which is determined as a function of the short term RMS amplitude characteristics and long term RMS amplitude characteristics of each of said audio outputs;
summation means for summing said weighted audio signals;
encoding means for digitally encoding the summed weighted signals;
multiplexer means for combining said digitally encoded signal with amplitude data received from each of said weighting means; and
storage means for storing the output of said multiplexer.

The storage means preferably comprises a solid state flash memory. Further preferably, means for generating the weighting function may be based upon a digital signal processing (DSP) approach.

Preferably, said data-compression system enables the recordal of speech on the bridge of a ship as part of a maritime data-recorder, said recorder also storing radar information and other instrument and system readings, including, for example, position, speed and heading.

The advantages of the present invention are that the said weighting function modifies the response of individual audio signals such that said recovered digitally encoded signal has an optimised compression ratio and signal to noise ratio. Furthermore, parameters obtained from the weighting process retain spatial information which would otherwise be lost by simple mixing.

It will be obvious to those skilled in the art that variations of the present invention are possible, and it is intended that the present invention may be used other than specifically described herein. Specifically, the present invention may also be utilised for the recordal of voices of personnel operating in a large predetermined space with more than one microphone, for example, the control room of a power station or other safety critical establishment.

A specific non-limiting embodiment of the invention will now be described by way of example and with reference to the accompanying drawings, in which:
Figure 1 is a schematic diagram of the present system.
Figure 2 illustrates the weighting process for a single audio signal.

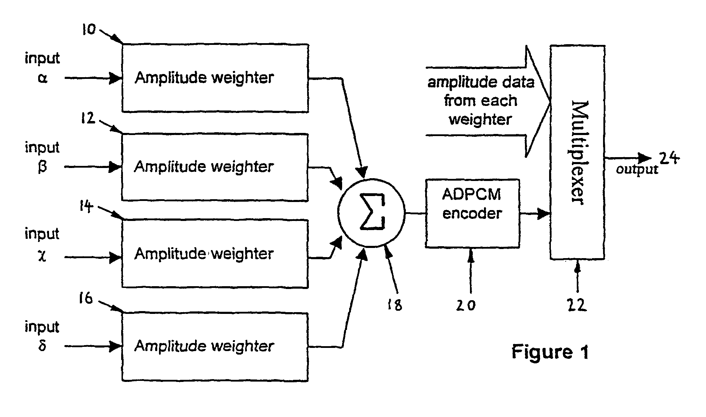

Referring now to the drawings, the proposed scheme is illustrated in Figure 1. For illustration purposes, four audio inputs α, β, χ and δ are taken from four microphones which are situated, usually, in the bridge of a ship. The four audio inputs α, β, χ and δ being weighted 10, 12, 14 and 16 and then summed 18 before being encoded digitally 20 and stored. For each audio input from the microphone, two corresponding weighting factors are generated, the first follows short term changes in amplitude that may result from speech, whilst the second is largely determined by the background noise level experienced by the microphone. The weighting being a function of the short and long term amplitudes of all four inputs.

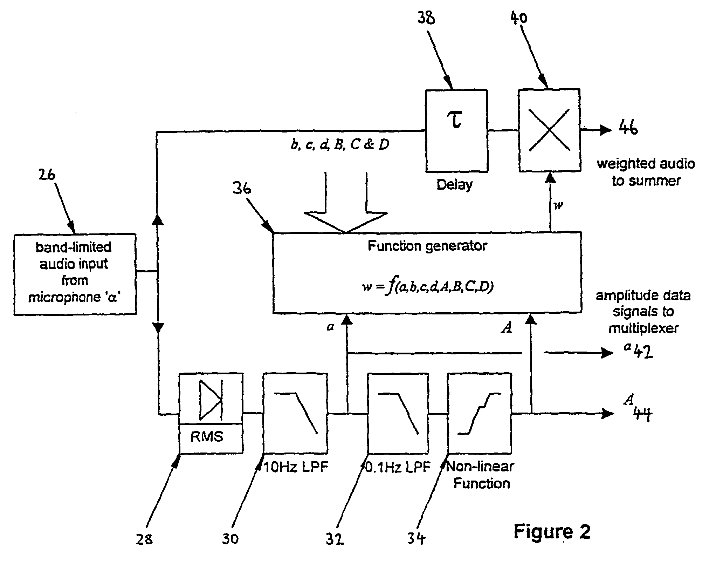

Figure 2 illustrates the weighting process for one of the four audio inputs, termed α. The other three signals are processed in the same manner. The analogue signal 26 is split into two paths, in one its RMS value is determined 28 with is then passed through a low pass filter 30 having a -3dB frequency of around 10 Hz. The output of this low pass filter a is one of the signals used to determine the weighting function 42, together with the corresponding ones for the other three signals *b*, *c* and *d*. The other 44 being non-linear functions 34 of the output of a second low pass filter 32, which has a -3dB cut-off of around 0.1Hz, and correspondingly designated *A*, *B*, *C* and *D*. The non-linear signals *a*, *b*, *c* and *d* follow the short term changes in amplitude that might have resulted from speech whilst *A*, *B, C* and *D* are largely determined by the background noise levels experienced by each of the microphones.

The weighting function for that channel is now determined as ratio of the short term amplitude to long term amplitude of all channels, and implemented using a digital signal processor 36. The weighting factor determined for the respective signal is now applied 40 to the delayed audio input 38 before the signal is summed with the remaining three other signals.

The eight weighting function matrices generated from each of the four signals may also be multiplexed with the encoded weighted audio signal, so that information may be obtained as to the relative position of the talking individual. In order to avoid the problem in which the weighting functions *A, B, C* and *D* approach closely to zero and hence the weighting terms become excessively large, a lower bound is set to the value that the *A*, *B*, *C* and *D* terms can have, by virtue of the non-linear function applied to the second low pass filter. The delay 38 in Figure 2, denoted by a time τ, is substantially equal to that of the RMS generator 28 and the 10 Hz low pass filter 30.

In order to comply with International Maritime Organisation provisions, the storage requirements in terms of the weighted summation of, for example, two sets of four audio channels is less than that required through simple mixing of, say, seven microphones in three channels. Of course, the recovered audio signal will also benefit from an enhanced clarity and an optimised signal to noise.

## Claims

1. A data compression system for combining a plurality of audio channels whilst retaining the intelligibility of the respective channels relative to one another and minimising the relative storage requirements, comprising:
input means for receiving a plurality of audio signals;
weighting means (10, 12, 14, 16, 36) for weighting each of said audio signals (26) in accordance with a predetermined weighting factor which is determined as a function of the short term RMS amplitude characteristics (42) and long term RMS amplitude characteristics (44) of each of said audio signals;
summing means (18) for receiving and combining said weighted audio signals;
encoding means (20) for digitally encoding the output of said summing means; and
storage means for storing said digitally encoded summed signal.

2. A data compression system as claimed in Claim 1, wherein each of said audio signals (26) is provided by the output of each respective microphone.

3. A data compression system as claimed in Claims 1 or 2, wherein said weighting means (10, 12, 14, 16, 36) is implemented using a digital signal processor.

4. A data compression system for enabling the recordal of speech from one or more individuals within a predetermined area utilising a plurality of spaced-apart microphones, comprising:
means for receiving respective audio outputs (26) from each of said microphones and weighting (10, 12, 14, 16, 36) each of said respective signals in accordance with a predetermined weighting factor which is determined as a function of the short term RMS amplitude characteristics (42) and long term RMS amplitude characteristics (44) of each of said audio outputs (26);
summation means (18) for summing said weighted audio signals;
encoding means (20) for digitally encoding the summed weighted signals;
multiplexer means (22) for combining said digitally encoded signal with amplitude data received from each of said weighting means; and
storage means for storing the output of said multiplexer.

5. A data compression system as claimed in any preceding claim, wherein said predetermined weighting factor is provided by the ratio of short term RMS amplitude characteristics (42) to long term RMS amplitude characteristics (44) of each of said audio signals (26).

6. A data compression system as claimed in any preceding claim, wherein said short term RMS amplitude characteristics (42) of each of said audio signals (26) is determined primarily from the intelligible speech portion of said audio input signal (26).

7. A data compression system as claimed in any preceding claim, wherein said long term RMS amplitude characteristics (44) of each of said audio signals (26) is determined primarily from the background noise level of said audio input signal (26).

8. A data compression system as claimed in any preceding claim, wherein said short term RMS amplitude characteristics (42) and long term RMS amplitude characteristics (44) of each of said audio signals (26) is digitally encoded (20) and stored with the weighted signal to provide spatial information.

9. A data compression system as claimed in any preceding claim, wherein said short RMS term amplitude characteristics (42) of each of said audio signals (26) is determined by passing each of said audio signals (26) through a RMS generator (28) and a first filter means (30).

10. A data compression system as claimed in any preceding claim, wherein said long term RMS amplitude characteristics (44) of each of said audio signals (26) is determined by passing each of said audio signals (26) through a RMS generator (28), a first filter means (30), a second filter means (32) and a non-linear function generator (34).

11. A data compression system as claimed in Claims 9 or 10, wherein said first filter means (30) further comprises a low pass filter arrangement having an upper pass band of around 10Hz.

12. A data compression system as claimed in Claim 10, wherein said second filter means (32) further comprises a low pass filter arrangement having an upper pass band of around 0.1Hz.

13. A data compression system as claimed in any preceding claim, wherein said encoding means (20) is provided by adaptive digital pulse code modulation.

14. A data compression system claimed in any preceding claim, wherein said storage means further comprises a solid state flash memory.

15. A data compression system as claimed in Claim 4, wherein means for receiving respective audio outputs (26) from each of said microphones and weighting (10, 12, 14, 16, 36) each of said respective signals is implemented using a digital signal processor.

16. A data compression system as claimed in any preceding claim, wherein said data compression system is part of maritime data-recorder or other broadcast system.

## Patentansprüche

1. Ein Datenkompressionssystem zum Kombinieren einer Mehrzahl von Audiokanälen, wobei die Verständlichkeit der jeweiligen Kanäle relativ zueinander beibehalten wird und die relativen Speicheranforderungen minimiert werden, umfassend:
Eingabemittel zum Empfangen einer Mehrzahl von Audiosignalen;
Wichtungsmittel (10,12,14,16,36) zum Wichten jedes der Audiosignale (26) in Übereinstimmung mit einem vorgegebenen Wichtungsfaktor, welcher als Funktion der Kurzzeit-RMS-Amplitudencharakteristika (42) und der Langzeit-RMS-Amplitudencharakteristika (44) jedes der Audiosignale bestimmt wird;
Summiermittel (18) zum Empfangen und Kombinieren der gewichteten Audiosignale;
Codiermittel (20) zum digitalen Codieren des Ausgangssignals der Summiermittel; und
Speichermittel zum Speichern des digital codierten summierten Signals.

2. Ein Datenkompressionssystem nach Anspruch 1, wobei jedes der Audiosignale (26) von der Ausgabe eines jeweiligen Mikrophons zur Verfügung gestellt wird.

3. Ein Datenkompressionssystem nach Anspruch 1 oder 2, wobei die Wichtungsmittel (10,12,14,16,36) unter Verwendung eines digitalen Signalprozessors implementiert sind.

4. Ein Datenkompressionssystem zum Ermöglichen der Aufzeichnung von Sprache von einer oder von mehreren Einzelpersonen innerhalb eines vorgegebenen Bereichs unter Verwendung einer Mehrzahl von beabstandeten Mikrophonen, umfassend:
Mittel zum Empfangen jeweiliger Audioausgangssignale (26) aus jedem der Mikrophone und zum Wichten (10,12,14,16,36) jedes der zugehörigen Signale in Übereinstimmung mit einem vorgegebenen Wichtungsfaktor, welcher als Funktion der Kurzzeit-RMS-Amplitudencharakteristika (42) und der Langzeit-RMS-Amplitudencharakteristika (44) jedes der Audioausgangssignale (26) bestimmt wird;
Summationsmittel (18) zum Summieren der gewichteten Audiosignale;
Codiermittel (20) zum digitalen Codieren der summierten gewichteten Signale;
Multiplexermittel (22) zum Kombinieren des digital codierten Signals mit aus jedem der Wichtungsmittel empfangenen Amplitudendaten; und
Speichermittel zum Speichern der Ausgabe des Multiplexers.

5. Ein Datenkompressionssystem nach einem der vorhergehenden Ansprüche, wobei der vorgegebene Wichtungsfaktor durch das Verhältnis der Kurzzeit-RMS-Amplitudencharakteristika (42) zu den Langzeit-RMS-Amplitudencharakteristika (44) jedes der Audiosignale (26) geliefert wird.

6. Ein Datenkompressionssystem nach einem der vorhergehenden Ansprüche, wobei die Kurzzeit-RMS-Amplitudencharakteristika (42) jedes der Audiosignale (26) primär aus dem verständlichen Sprachanteil des Audioeingangssignals (26) bestimmt werden.

7. Ein Datenkompressionssystem nach einem der vorhergehenden Ansprüche, wobei die Langzeit-RMS-Amplitudencharakteristika (44) jedes der Audiosignale (26) primär aus dem Hintergrundrauschpegel des Audioeingabesignals (26) bestimmt werden.

8. Ein Datenkompressionssystem nach einem der vorhergehenden Ansprüche, wobei die Kurzzeit-RMS-Amplitudencharakteristika (42) und Langzeit-RMS-Amplitudencharakteristika (44) jedes der Audiosignale (26) digital codiert (20) und mit dem gewichteten Signal gespeichert werden, um räumliche Informationen zur Verfügung zu stellen.

9. Ein Datenkompressionssystem nach einem der vorhergehenden Ansprüche, wobei die Kurzzeit-RMS-Amplitudencharakteristika (42) jedes der Audiosignale (26) bestimmt werden, indem jedes der Audiosignale (26) durch einen RMS-Generator (28) und ein erstes Filtermittel (30) hindurchgeleitet wird.

10. Ein Datenkompressionssystem nach einem der vorhergehenden Ansprüche, wobei die Langzeit-RMS-Amplitudencharakteristika (44) jedes der Audiosignale (26) bestimmt werden, indem jedes der Audiosignale (26) durch einen RMS-Generator (28), ein erstes Filtermittel (30), ein zweites Filtermittel (32) und einen nicht-linearen Funktionsgenerator (34) hindurchgeleitet wird.

11. Ein Datenkompressionssystem nach Anspruch 9 oder 10, wobei das erste Filtermittel (30) ferner eine Tiefpaßfilteranordnung aufweist, die ein oberes Durchlaßband von etwa 10 Hz hat.

12. Ein Datenkompressionssystem nach Anspruch 10, wobei das zweite Filtermittel (32) ferner eine Tiefpaßfilteranordnung aufweist, die ein oberes Durchlaßband von etwa 0,1 Hz hat.

13. Ein Datenkompressionssystem nach einem der vorhergehenden Ansprüche, wobei die Codiermittel (20) durch eine adaptive digitale Impulscodemodulation zur Verfügung gestellt werden.

14. Ein Datenkompressionssystem nach einem der vorhergehenden Ansprüche, wobei die Speichermittel ferner einen Festkörper-Flash-Speicher umfassen.

15. Ein Datenkompressionssystem nach Anspruch 4, wobei die Mittel zum Empfangen der jeweiligen Audioausgangssignale (26) aus jedem der Mikrophone und zum Wichten (10,12,14,16,36) jedes der zugehörigen Signale unter Verwendung eines digitalen Signalprozessors implementiert sind.

16. Ein Datenkompressionssystem nach einem der vorhergehenden Ansprüche, wobei das Datenkompressionssystem Teil eines maritimen Datenrecorders oder eines anderen Rundfunksystems ist.

## Revendications

1. Un système de compression de données pour combiner une pluralité de canaux audio tout en maintenant l'intelligibilité des canaux respectifs les uns par rapport aux autres et en minimisant les encombrements relatifs, comprenant :
un moyen d'entrée pour recevoir une pluralité de signaux audio ;
un moyen de pondération (10, 12, 14, 16, 36) pour pondérer chacun desdits signaux audio (26) conformément à un facteur de pondération prédéterminé qui est déterminé comme une fonction des caractéristiques de valeur efficace à court terme de l'amplitude (42) et des caractéristiques de valeur efficace à long terme de l'amplitude (44) de chacun desdits signaux audio ;
un moyen sommateur (18) pour recevoir et combiner lesdits signaux audio pondérés ;
un moyen de codage (20) pour coder numériquement la sortie desdits moyens sommateurs ; et
un moyen de stockage pour stocker ledit signal sommé encodé numériquement.

2. Un système de compression de données selon la revendication 1, dans lequel chacun desdits signaux audio (26) est fourni par la sortie de chaque microphone respectif.

3. Un système de compression de données selon la revendication 1 ou 2, dans lequel ledit moyen de pondération (10, 12, 14, 16, 36) est mis en oeuvre à l'aide d'un processeur de signal numérique.

4. Un système de compression de données pour permettre l'enregistrement de la parole d'un ou plusieurs individus à l'intérieur d'une zone prédéterminée, en utilisant une pluralité de microphones espacés, comprenant :
un moyen pour recevoir des sorties audio respectives (26) de chacun desdits microphones et pour pondérer (10, 12, 14, 16, 36) chacun desdits signaux respectifs conformément à un facteur de pondération prédéterminé qui est déterminé comme une fonction des caractéristiques de valeur efficace à court terme de l'amplitude (42) et des caractéristiques de valeur efficace (RMS) à long terme de l'amplitude (44) de chacune desdites sorties audio (26) ;
un moyen sommateur (18) pour sommer lesdits signaux audio pondérés ;
un moyen de codage (20) pour coder numériquement les signaux pondérés sommés ;
un moyen de multiplexage (22) pour combiner ledit signal encodé numériquement avec les données d'amplitude reçues de chacun desdits moyens de pondération ; et
un moyen de stockage pour stocker la sortie dudit multiplexeur.

5. Un système de compression de données selon l'une quelconque des revendications précédentes, dans lequel ledit facteur de pondération prédéterminé est fourni par le rapport des caractéristiques de valeur efficace à court terme de l'amplitude (42) aux caractéristiques de valeur efficace à long terme de l'amplitude (44) de chacun desdits signaux audio (26).

6. Un système de compression de données selon l'une quelconque des revendications précédentes, dans lequel lesdites caractéristiques de valeur efficace à court terme de l'amplitude (42) de chacun desdits signaux audio (26) sont déterminées essentiellement à partir de la partie de parole intelligible dudit signal audio en entrée (26).

7. Un système de compression de données selon l'une quelconque des revendications précédentes, dans lequel lesdites caractéristiques de valeur efficace à long terme de l'amplitude (44) de chacun desdits signaux audio (26) sont déterminées essentiellement à partir du niveau de bruit de fond dudit signal audio en entrée (26).

8. Un système de compression de données selon l'une quelconque des revendications précédentes, dans lequel les caractéristiques de valeur efficace à court terme de l'amplitude (42) et les caractéristiques de valeur efficace à long terme de l'amplitude (44) de chacun desdits signaux audio (26) sont encodées numériquement (20) et stockées avec le signal pondéré pour fournir une information spatiale.

9. Un système de compression de données selon l'une quelconque des revendications précédentes, dans lequel lesdites caractéristiques de valeur efficace à court terme de l'amplitude (42) de chacun desdits signaux audio (26) sont déterminées en passant chacun desdits signaux audio (26) à travers un générateur RMS (28) et un premier moyen de filtrage (30).

10. Un système de compression de données selon l'une quelconque des revendications précédentes, dans lequel lesdites caractéristiques de valeur efficace à long terme de l'amplitude (44) de chacun desdits signaux audio (26) sont déterminées en passant chacun desdits signaux audio (26) à travers un générateur RMS (28), un premier moyen de filtrage (30), un deuxième moyen de filtrage (32) et un générateur de fonctions non linéaires (34).

11. Un système de compression de données selon la revendication 9 ou 10, dans lequel ledit premier moyen de filtrage (30) comprend en outre un agencement de filtrage passe-bas ayant une bande passante supérieure d'environ 10 Hz.

12. Un système de compression de données selon la revendication 10, dans lequel le deuxième moyen de filtrage (32) comprend en outre un agencement de filtrage passe-bas ayant une bande passante supérieure d'environ 0,1 Hz.

13. Un système de compression de données selon l'une quelconque des revendications précédentes, dans lequel ledit moyen de codage (20) est fourni par une modulation par impulsions et codage numérique adaptatif.

14. Un système de compression de données selon l'une quelconque des revendications précédentes, dans lequel ledit moyen de stockage comprend en outre une mémoire flash à semi-conducteurs.

15. Un système de compression de données selon la revendication 4, dans lequel le moyen pour recevoir les sorties audio respectives (26) de chacun desdits microphones et pour pondérer (10, 12, 14, 16, 36) chacun desdits signaux respectifs, est mis en oeuvre à l'aide d'un processeur de signal numérique.

16. Un système de compression de données selon l'une quelconque des revendications précédentes, dans lequel ledit système de compression de données fait partie d'un enregistreur de données maritimes ou d'un autre système de diffusion.
